# EUROPÄISCHE PATENTSCHRIFT

(11) **EP 1 856 971 B1**
(45) Veröffentlichungstag und Bekanntmachung des Hinweises auf die Patenterteilung: **02.02.2011**
(21) Anmeldenummer: 07009671.4
(22) Anmeldetag: 15.05.2007
(51) Int. Cl.: A01K 31/16, G06M 7/04

(54) **Eierzählsensor**
Egg count sensor
Capteur de comptage des oeufs

(30) Priorität: 15.05.2006 DE 202006007875 U
(43) Veröffentlichungstag der Anmeldung: 21.11.2007
(73) Patentinhaber: Big Dutchman International GmbH, 49377 Vechta (DE)
(72) Erfinder: Kalkhoff, Christian, 49377 Vechta (DE)
(74) Vertreter: Eisenführ, Speiser & Partner

(56) Entgegenhaltungen:
- WO-A-97/43733
- WO-A-2004/004319
- GB-A- 2 226 130
- JP-A- 2000 235 005
- JP-A- 2001 027 612
- JP-A- 2003 346 124
- US-A- 4 253 120
- US-A- 4 868 901
- US-A1- 2005 063 513

## Beschreibung

Die Erfindung betrifft eine Vorrichtung zum Zählen von Gegenständen, insbesondere Eiern, umfassend eine Vielzahl von ersten Detektoren, von denen jeder einen lokal begrenzten Detektionsbereich aufweist, die eine elektromagnetische Strahlung, insbesondere Licht im sichtbaren oder infraroten Bereich, aus dem Detektionsbereich erfassen können, und die in einer ersten Zeile nebeneinander angeordnet sind, eine Auswertungseinheit, die mit den ersten Detektoren gekoppelt und ausgebildet ist, um die Signale der ersten Detektoren zu verarbeiten und aufgrund des Signals jedes ersten Detektors das Vorhandensein eines Gegenstands im Detektionsbereich des ersten Detektors zu ermitteln. Ein weiterer Aspekt der Erfindung ist ein Verfahren zum Zählen von Gegenständen.

Das Zählen von Gegenständen ist in einer Vielzahl von Anwendungsbereichen erforderlich, beispielsweise zur Steuerung von Produktionsabläufen oder Fördervorgängen. Die Aufgabe von Zählvorrichtungen bzw. Zählverfahren ist es, die Anzahl vereinzelter Produkte festzustellen, die in einem bestimmten Zeitraum, in einem bestimmten Flächenbereich und/oder durch eine bestimmte Anzahl von Produktiveinheiten hergestellt wird bzw. vorhanden ist. Zu diesem Zweck werden die Produkte entweder an einer stationär angeordneten Zählvorrichtung vorbeigeführt, beispielsweise einer Fördervorrichtung oder die Zählvorrichtung wird entlang der Produkte bewegt.

Eine typische Anwendung solcher Zählvorrichtungen für Gegenstände ist das Zählen von Eiern innerhalb oder außerhalb eines Stallgebäudes für eierlegendes Geflügel. Bei dieser Anwendung ist das Zählen einerseits erforderlich, um den Abtransport der gelegten Eier aus dem Legebereich oder aus nach dem Legebereich angeordneten Sammelstellen überwachen und steuern zu können, andererseits gibt die Anzahl der gelegten Eier, insbesondere wenn sie aufgeschlüsselt nach Tieren, Stalleinheiten, Stallreihen oder anderen zusammengefassten Einheiten ist, einen Aufschluss über die Legeleistung und erlaubt den Rückschluss auf etwaige Unregelmäßigkeiten, wie beispielsweise Erkrankungen.

Aus US 4,868,901 ist eine Zählvorrichtung bekannt, die aus einer Vielzahl von paarweise angeordneten Sende- und Detektionspaaren besteht, die in Reihe nebeneinander angeordnet sind. Die Reihe erstreckt sich quer über ein Förderband, auf dem die Eier an der Zählvorrichtung vorbeigefördert werden. Aufgrund der unterschiedlichen Reflektionseigenschaften der Förderbandoberfläche und der Oberfläche eines darauf angeordneten Eies kann mit dieser vorbekannten Zählvorrichtung auf das Vorhandensein eines Eies im Bereich eines der Detektoren geschlossen werden. Mehrere in diskreten zeitlichen Abständen durchgeführte Messungen erlauben es, die mit den Detektoren zu verschiedenen Zeitpunkten ermittelten Oberflächenabschnitte einem einzelnen Ei zuzuordnen und auf diese Weise einen Rückschluss auf den vollständigen Durchlauf eines Eies unter der Zählvorrichtung vorzunehmen. Auf diese Weise kann durch entsprechende, aufeinanderfolgende Zu- und Abnahme der Anzahl der die Eioberfläche registrierenden Detektoren auf den vermeintlichen Durchlauf eines Eies geschlossen werden und folglich eine Eizählung erfolgen.

Ein Problem bei der Förderung von Gegenständen, insbesondere abgerundeten Gegenständen wie Eiern, besteht jedoch darin, dass diese sich bei Beschleunigungsvorgängen der Fördervorrichtung eigenständig bewegen können, beispielsweise entgegen der Förderrichtung rollen können. Insbesondere dann, wenn die Fördervorrichtung aufgrund von Steuerungsvorgängen oder dergleichen oftmals abgestoppt wird und wiederum anläuft, können sich abgerundete Gegenstände auch entgegen der Förderrichtung durch die Zählvorrichtung bewegen. Die vorbekannte Zählvorrichtung ist jedoch nicht in der Lage, zwischen Gegenständen zu unterscheiden, die sich in Fördervorrichtung oder entgegen der Förderrichtung zu ihr bewegen, so dass bei solchen gegenläufigen Bewegungen regelmäßig ein Zählfehler auftritt.

Es besteht daher ein Bedarf für eine Zählvorrichtung, die eine höhere Sicherheit des Zählergebnisses erreicht, insbesondere auch dann, wenn sich die Gegenstände zeitweilig entgegen der Förderrichtung bewegen.

Ein Lösungsansetz hierzu ist aus JP 2003346124 bekannt.

Die Anforderungen an die Steuerung von Produktionsabläufen erhöhen sich laufend und insbesondere in Bereichen, in denen Tiere in die Produktion eingebunden sind, bestehen aus Tierschutzgründen erhöhte Anforderungen an die Produktionsablaufsteuerung. Es besteht daher nicht nur ein Bedarf für eine Zählvorrichtung, die eine zuverlässige Zählung der Produkte erzielt, sondern auch für eine Zählvorrichtung, die über den eigentlichen Zählvorgang hinaus zusätzliche Daten erfasst, die Rückschlüsse auf den Produktionsablauf und etwaige Produktionsstörungen, wie beispielsweise Erkrankungen der Tiere, ermöglicht. Unter einer Zählvorrichtung bzw. einer Vorrichtung zum Zählen soll daher in dieser Beschreibung und den anhängenden Ansprüchen eine Vorrichtung verstanden werden, die sich zum Zählen von Gegenständen eignet, darüber hinaus jedoch auch ausgebildet sein könnte, um weitere Daten zu den gezählten Gegenständen zu erfassen. In gleicher Weise soll unter einen Zählverfahren bzw. einem Verfahren zum Zählen ein Verfahren verstanden werden, das Gegenstände einerseits zählt, andererseits jedoch auch ausgebildet sein kann, um über das Zählen der Gegenstände hinaus weitere Erfassungsschritte zu Daten der gezählten Gegenstände durchführen zu können.

Der zuvor beschriebene Bedarf wird erfindungsgemäß durch eine Zählvorrichtung bzw. ein Zahlverfahren nach Anspruch 1 bzw 15 befriedigt.

Die Erfindung ermöglicht es, auf einfache und zuverlässige Weise die Bewegungsrichtung eines Gegenstands relativ zur Zählvorrichtung festzustellen, Zu diesem Zweck stellt die erfindungsgemäße Zählvorrichtung zumindest eine weitere Reihe von Detektoren bereit, die so angeordnet ist, dass ein zu zählender Gegenstand den Detektionsbereich der ersten und zweiten Zeile von Detektoren bei regulärer Relativbewegung bzw. Förderung aufeinanderfolgend durchläuft. Die Ausführungsform der erfindungsgemäßen Zählvorrichtung ermöglicht es, dass bei in diskreten Zeitabständen erfolgender Detektion mit der ersten und zweiten Zeile ein Gegenstand identifiziert und sein Umriss zumindest teilweise erkannt wird und durch Vergleich zumindest zweier in zeitlichem Abstand zueinander erfolgten Detektionen die Bewegungsrichtung des Gegenstands zweifelsfrei festgestellt wird. Die erfindungsgemäße Zählvorrichtung ist daher in der Lage, Gegenstände zuverlässig zu zählen, auch wenn sich diese zeitweise entgegen der eigentlichen relativen Bewegungsrichtung zwischen der Zählvorrichtung und den Gegenständen bewegen, indem der Gegenstand nicht nur detektiert und identifiziert werden kann, sondern darüber hinaus auch die Bewegungsrichtung des Gegenstands ermittelt werden kann.

Unter einem Detektor soll in diesem Zusammenhang jede Art von Sensor verstanden werden, der in der Lage ist, das Vorhandensein eines Gegenstands in einem umgrenzten Detektionsbereich zu detektieren. Hierzu eignen sich insbesondere berührungslos arbeitende Detektoren, wie beispielsweise Strahlungsempfänger, die im sichtbaren oder infraroten Lichtbereich arbeiten. Die Detektoren können gegebenenfalls mit entsprechenden Sendevorrichtungen, wie beispielsweise Lichtstrahlem oder dergleichen zusammenarbeiten, um auf diese Weise eine zeitlich begrenzte Ausleuchtung des Detektionsbereichs zu ermöglichen, können jedoch auch mit Umgebungslicht oder anderer, vorhandener Strahlung oder messbaren Eigenschaften des zu zählenden Gegenstands arbeiten.

Die ersten und zweiten Detektoren sind erfindungsgemäß in einer ersten bzw. zweiten Zeile nebeneinander angeordnet. Dabei ist es weder erforderlich, dass die Detektoren in gleichmäßigen Abständen zueinander angeordnet sind, noch, dass die Detektoren exakt linienförmig oder exakt senkrecht zur relativen Bewegungsrichtung zwischen Zählvorrichtung und Gegenständen ausgerichtet sind. Stattdessen ist es für die Ausführbarkeit der Erfindung hinreichend, wenn sich die Detektoren quer oder schräg relativ zu dieser Bewegungsrichtung in einer Reihe linienförmig oder versetzt zueinander erstrecken, um auf diese Weise einen Bereich abzudecken, durch den die zu zählenden Gegenstände hindurchlaufen müssen.

Die Auswertungseinheit kann unmittelbar an der Zählvorrichtung oder beabstandet zu dieser angeordnet sein. Die Auswertungseinheit kann in mehrere Einzelauswertungseinheiten unterteilt sein oder kann durch eine einzige logische Schaltung ausgebildet werden. Nach der Erfindung ist die Auswertungseinrichtung ausgebildet, um durch Vergleichen der Detektorsignale benachbarter erster Detektoren und benachbarter zweiter Detektoren zumindest einen Ausschnitt der Kontur des Gegenstands senkrecht zur Detektionsrichtung zu ermitteln. Die Ermittlung der Kontur, zumindest ausschnittsweise, ermöglicht einerseits besonders sicher, andererseits mit geringem Datenverarbeitungsaufwand eine Identifikation von Gegenständen. Die Kontur stellt sich hierbei typischerweise zweidimensional dar und kann als Ausschnitt durch eine einmalige Datenerfassung der ersten und zweiten Detektoren ermittelt werden, oder, als größerer Ausschnitt oder vollständig, durch mehrmalige, zeitlich beabstandete Datenerfassungen der ersten und/oder der zweiten Detektoren, wenn eine Relativbewegung zwischen den Detektoren und dem Gegenstand vorliegt. Ein auf der Konturlinie des Gegenstands liegender Konturlinienpunkt kann dabei ermittelt werden als derjenige Punkt, an dem eine signifikante Veränderung zwischen zwei Detektorsignalen räumlich beabstandeter Detektoren oder zeitlich beabstandet aufgenommener Detektorsignale festgestellt wurde. Typischerweise zeigen die zwei benachbart zu der Konturlinie abtastenden Detektoren signifikant unterschiedliche Detektorsignale und jeweils benachbart zu diesen jeweiligen Detektoren liegende Detektoren zeigen ähnliche Detektorsignale wie diese, so dass auf eine Konturlinie zwischen den beiden erstgenannten Detektoren geschlossen werden kann. Da es sich bei der Konturlinie typischerweise um eine kontinuierliche Linie handelt, kann durch Interpolation und logische Datenverarbeitung aus den in diskreten Abständen ermittelten Konturlinienpunkten eine durchgezogene Konturlinie berechnet werden. Dies kann typischerweise auch in der Auswertungseinrichtung erfolgen.

Die Auswertungseinrichtung ist weiterhin ausgebildet ist, um durch Vergleich zweier zeitlich beabstandet ermittelter Ausschnitte der Kontur des Gegenstands eine Bewegungsrichtung des Gegenstands relativ zu den Detektoren zu ermitteln. Die Ermittlung der Konturlinie erlaubt es grundsätzlich, nicht nur auf das Vorhandensein eines Gegenstands im Detektionsbereich der Detektoren zu schließen, sondern auch auf dessen Lage relativ zu den Detektoren. Durch Vergleich zweier zeitlich beabstandet ermittelter Konturen oder Konturausschnitten kann somit eine Verschiebung der Lage des Gegenstands relativ zu den Detektoren erfasst werden und folglich auf die Bewegungsrichtung des Gegenstands geschlossen werden. Dies ermöglicht es, eine reguläre Bewegungsrichtung der gewünschten Förderrichtung oder eine irreguläre Bewegungsrichtung entgegen der Förderrichtung, beispielsweise ein Rollen des Gegenstands, zu erfassen. Dabei kann neben der Bewegungsrichtung selbst auch die Bewegungsgeschwindigkeit erfasst werden, indem der in der Zeitspanne zwischen den beiden Messungen zurückgelegte Weg des Gegenstands über die Zeitspanne differenziert wird.

Es ist weiterhin bevorzugt, dass eine bestimmte Anzahl von ersten und zweiten Detektoren in einer ersten bzw. zweiten Zeile angeordnet sind und eine Schnittstelle vorhanden ist, um die Vorrichtung mit einer anderen Vorrichtung mit ersten und zweiten Detektoren so zu koppeln, dass die ersten und zweiten Zeilen der beiden Vorrichtungen in Verlängerung zueinander angeordnet sind. Zählvorrichtungen der eingangs genannten Art werden häufig eingesetzt, um Gegenstände, die sich über verschiedene Breiten relativ zu ihnen bewegen, beispielsweise verschiedene Förderbandbreiten, zu zählen. Zählvorrichtungen nach dem Stand der Technik haben eine fest vorgegebene Breite und die Gegenstände werden zu Zählzwecken oftmals durch Führungseinrichtungen oder dergleichen auf diese Breite zusammengeführt, um zu verhindern, dass seitlich, außerhalb des Zählbereichs, Gegenstände die Zählvorrichtung passieren. Dieses Zusammenführen kann jedoch zu einer mechanischen Beschädigung der Gegenstände führen. Die erfindungsgemäße Fortbildung ermöglicht es, dass die Zählvorrichtung sich über eine beliebige Breite erstreckt, indem mehrere Einzelzählvorrichtungen so miteinander gekoppelt werden, dass sie eine ausreichend lange Zählvorrichtung ausbilden, die sich quer über einen Zählbereich beliebiger Breite erstrecken kann. Auf diese Weise wird eine modulartige Anpassung der Zählvorrichtung an die fertigungs- oder fördertechnischen Gegebenheiten, wie insbesondere die Förderbandbreite, und eine schonende Zählung der Gegenstände ermöglicht.

Es ist weiterhin bevorzugt, dass die Detektoren ausgebildet sind, um im infraroten Wellenbereich zu detektieren und dass zumindest eine Infrarot-Strahlungsquelle bereitgestellt ist zur Ausleuchtung der Detektionsbereiche. Insbesondere in Bereichen, in denen eine Ausleuchtung mit Tageslicht vorherrscht, ist es vorteilhaft, zur Detektion eine andere Wellenlänge zu verwenden. Hierfür eignet sich insbesondere der infrarote Wellenbereich. Der für die Messung genutzte Wellenlängenbereich soll darüber hinaus in vielen Anwendungen kein Ungeziefer anziehen, weshalb sich infrarotes Licht ebenfalls besonders eignet. Eine Detektion im infraroten Wellenbereich erlaubt es, durch gezielte und zeitlich begrenzte Infarot-Beleuchtung des Detektionsbereich zeitlich beabstandete Messungen in definierter Weise auszuführen. Insbesondere können auch einzelne Detektionsbereiche zeitlich nacheinander beleuchtet werden, um hierdurch eine Verfälschung der Messsignale benachbarter Detektionsbereiche zu vermeiden.

Die erfindungsgemäße Vorrichtung ist ausgebildet , um durch Vergleichen der Detektorsignale benachbarter erster Detektoren und benachbarter zweiter Detektoren zumindest einen Ausschnitt der Kontur des Gegenstands senkrecht zur Detektionsrichtung zu ermitteln und durch Vergleich zweier zeitlich beabstandet erfasster und ermittelter Ausschnitte der Kontur des Gegenstands einerseits eine Bewegungsrichtung des Gegenstands relativ zu den Detektoren zu ermitteln und andererseits zu ermitteln, ob ein neuer Gegenstand in den Detektionsbereich eingetreten ist und dass die Auswertungseinrichtung eine Zählvorrichtung umfasst, die ausgebildet ist, um einen Zähler um eins zu erhöhen, wenn ein neuer Gegenstand sich in einer Eintrittsrichtung in den Detektionsbereich der Detektoren bewegt hat und identifiziert worden ist. Der Zähler kann beispielsweise durch eine digitale Speichervorrichtung mit einer entsprechend angepassten logischen Schaltung gebildet werden. Die Eintrittsrichtung ist insbesondere die reguläre Relativbewegungsrichtung zwischen der Zählvorrichtung und den zu zählenden Gegenständen, d.h. beispielsweise die Förderrichtung einer die Gegenstände befördernden Fördervorrichtung. Unter einer Identifizierung eines Gegenstands ist hierbei beispielsweise zu verstehen, dass der Gegenstand anhand seiner Kontur oder eines Ausschnitts davon erkannt worden ist.

Eine besondere Bedeutung hat in diesem Zusammenhang die Prüfung, ob es sich bei dem ermittelten Gegenstand um einen bereits gezählten oder einen noch nicht gezählten, also neuen Gegenstand handelt. Dies kann vorzugsweise erfolgen, indem gezählte Gegenstände markiert werden, beispielsweise indem sie in einem Speicher abgespeichert werden und neu ermittelte Gegenstände mit den abgespeicherten Gegenständen verglichen werden oder (alternativ oder zusätzlich) die Anordnung der Gegenstände relativ zur Zählvorrichtung in zwei Erfassungs-Zeitpunkten verglichen wird, um daraus zu ermitteln, ob es sich um einen identischen, also bereits gezählten oder einen unterschiedlichen, also neuen Gegenstand handelt.

die Zählvorrichtung ist ausgebildet , um den Zähler um eins zu verringern, wenn ein bereits gezählter Gegenstand, der sich in den Detektionsbereich der Detektoren bewegt hat und identifiziert worden ist, sich entgegen seiner ursprünglichen Eintrittsrichtung aus dem Detektionsbereich bewegt hat. Auf diese Weise wird ein zuverlässiges Zählergebnis sichergestellt, auch wenn unerwünschterweise irreguläre Bewegungen der Gegenstände erfolgen, beispielsweise durch Rollen der Gegenstände entgegen der Förderrichtung. Dabei kann der Zähler sowohl dann verringert werden, wenn ein Gegenstand entgegen der regulären Bewegungsrichtung in den Detektionsbereich eintritt und diesen auch entgegen der regulären Bewegungsrichtung verlässt, als auch dann, wenn ein Gegenstand in regulärer Bewegungsrichtung eintritt, gezählt wird, und dann den Detektionsbereich entgegen der regulären Bewegungsrichtung verlässt.

Es ist weiterhin bevorzugt, wenn die Auswertungseinrichtung ausgebildet ist, um mehrere in den Detektionsbereichen der Detektoren erfasste Gegenstände gleichzeitig auszuwerten. Bei bestimmten Breiten des detektierten Zählbereichs und insbesondere bei Zählaufgaben an Fördervorrichtungen mit hoher Förderquote ist es nicht praktikabel, die zu zählenden Gegenstände zu Zählzwecken einzeln hintereinander anzuordnen, sondern die Gegenstände müssen zweifach oder mehrfach nebeneinander angeordnet die Zählvorrichtung passieren. In diesem Fall ist es vorteilhaft, wenn die Auswertungseinrichtung auch mehrere Produkte gleichzeitig auswerten kann, d.h. eine Differenzierung nebeneinander angeordneter und sich gleichzeitig im Detektionsbereich befindender Gegenstände vornehmen kann. Dabei kann die Auswertungseinrichtung logisch so fortgebildet sein, dass auch bei Kontakten der Konturlinie oder sogar Überschneidungen der Konturlinie die beiden oder mehreren sich berührenden oder überschneidenden Gegenstände differenziert ausgewertet und gezählt werden können.

Es ist insbesondere vorteilhaft, wenn die erfindungsgemäße Vorrichtung fortgebildet wird durch eine Speichervorrichtung, in der zumindest eine Kontur, vorzugsweise mehrere vorbekannte Konturen eines oder mehrerer Gegenstände abgespeichert sind und durch eine Vergleichsvorrichtung, um die von den Detektoren erfasste Kontur eines Gegenstands mit der/den abgespeicherten Kontur(en) zu vergleichen und den Gegenstand so zu identifizieren. Diese Fortbildungsform ermöglicht gleich eine Reihe von zusätzlichen Funktionen. So kann einerseits mit dieser Fortbildungsform eine sehr differenzierte Unterscheidung zwischen den zu zählenden Gegenständen und anderen durch den Detektionsbereich laufenden Strukturen erfolgen. Dies ist beispielsweise dann vorteilhaft, wenn die Gegenstände auf strukturierten Förderbändern, beispielsweise gelochten, geschlitzten, in anderer Weise perforierten Förderbändern oder Förderbändem mit Rippen, Noppen, oder dergleichen gefördert werden und eine Differenzierung zwischen den Perforationen oder sonstigen Strukturen des Förderbands und den Gegenständen erforderlich ist.

Die Fortbildungsform ermöglicht es des weiteren, eine Qualitätskontrolle der zu zählenden Gegenstände durchzuführen, indem Gegenstände, die sich im geometrisch normalen Bereich befinden, gezählt werden und Gegenstände, die sich außerhalb dieses Bereichs befinden, also nicht zu einer der abgespeicherten Konturen passen, nicht gezählt werden oder in einem entsprechenden separaten Fehlerspeicher gezählt werden und gegebenenfalls ein Signal zur Anzeige eines fehlerhaften Produkts ausgegeben wird. Eine typische Anwendung dieser Funktion ist beispielsweise beim Zählen von Hühnereiern die Erkennung von Windeiern, d.h. Eiern ohne Schale, die sich typischerweise durch eine hinsichtlich der Höhe abgeflachte und hinsichtlich der Breite in einer typischen Weise vergrößerte Kontur auszeichnen und auf diese Weise erkannt werden können. Die abgespeicherten Konturen sollten dabei einerseits mögliche Gegenstandsvariationen berücksichtigen, d.h. alle typischerweise auftretenden Konturvariationen abdecken, andererseits auch etwaige sich durch eine Aufstellung, Schräglage, Verkantung oder dergleichen der Produkte ergebende Kontur mit abdecken. So kann sich ein Hühnerei beispielsweise in einer aufgestellten Form auch abweichend von der sonstigen ovalen Form kreisrund darstellen und muss dennoch erkannt werden.

Allgemein und insbesondere zu dem vorgenannten Zweck ist es vorteilhaft, wenn die erfindungsgemäße Vorrichtung weiter fortgebildet wird, indem die ersten und/oder zweiten Detektoren ausgebildet sind, um eine Helligkeitsintensität und/oder einen Farbwert aus dem Detektionsbereich zu ermitteln. Insbesondere dann, wenn die zu zählenden Gegenstände eine gekrümmte Oberfläche aufweisen, wird durch unterschiedliche Reflexionsrichtungen bei ein-, aber auch mehrseitiger Beleuchtung eine unterschiedliche Verteilung der vom Detektor erfassten Helligkeit über die detektierte Gegenstandsoberfläche erzeugt. Diese Unterschiede in der Helligkeitsintensität der einzelnen Flächenabschnitte des zu zählenden Gegenstands können für eine besonders genaue Identifizierung des Gegenstands genutzt werden. In gleicher Weise können Farbwerte aus den Oberflächenbereichen des Gegenstands eingesetzt werden, um eine präzise Identifizierung der Gegenstände durchzuführen. Auf diese Weise ist es beispielsweise auch möglich, ein aufgestelltes Ei, das sich in der Kontur kreisrund darstellt, von einer Lochung eines Förderbands zu unterscheiden, da die Verteilung der Helligkeitsintensität im detektierten Oberflächenbereichs des Eies sich von derjenigen der Förderbandlochung unterscheidet.

Dabei ist es insbesondere bevorzugt, wenn die Auswertungseinrichtung ausgebildet ist, um anhand der Helligkeitsintensität und/oder des Farbwerts ein Oberflächenmerkmal des Gegenstands, insbesondere einen Verschmutzungsgrad, zu ermitteln. Auf diese Weise können Gegenstände präziser differenziert werden und entsprechend mehrere differenzierende Zähler hochgezählt werden, um genauere Ergebnisse über die gezählten Gegenstände zu erhalten. Insbesondere eignet sich diese Fortbildung dazu, um Produktionsstörungen zu erfassen, beispielsweise ungewöhnlich hohe Verschmutzungsgrade des Produkts, die anzeigen, dass in einem bestimmten Bereich eine Reinigung zu veranlassen ist. Eine Kombination mit dem Farbwert ermöglicht darüber hinaus eine differenzierte Beurteilung des Verschmutzungsgrads und kann beispielsweise für den Anwendungsfall einer Eierzählung auch ermöglichen, dass Blutreste auf den Eiern detektiert werden, um Verletzungen der Tiere schnell zu bemerken und eine entsprechende Behandlung einleiten zu können. Auch hier kann wiederum ein separater Fehlerspeicher für bestimmte, von der Normalität abweichende Detektionsergebnisse vorgesehen sein und es kann alternativ oder zusätzlich ein Warnsignal ausgelöst werden, um das von der Normalität abweichende Detektionsergebnis anzuzeigen.

Dabei ist es insbesondere bevorzugt, wenn die Vorrichtung fortgebildet wird durch eine Speichervorrichtung, in der zumindest ein, vorzugsweise mehrere vorbekannte Schwellwerte oder Verteilungen der Helligkeitsintensität und/oder der Farbwerte innerhalb der Kontur des Gegenstands abgespeichert sind, und durch eine Vergleichsvorrichtung, um einen von den Detektoren erfassten lokalen oder gemittelten Wert oder eine Verteilung der Helligkeitsintensität und/oder der Farbwerte eines Gegenstands mit der/den abgespeicherten Schwellwerten bzw. Verteilungen der Helligkeitsintensität und/oder Farbwerte zu vergleichen und den Gegenstand so bei Über- und/oder Unterschreitung eines Schwellwerts oder bei Übereinstimmung der abgespeicherten und erfassten Verteilungsmuster zu identifizieren. Diese Fortbildungsform arbeitet in gleicher Weise wie die zuvor beschriebene Fortbildungsform zum Vergleichen der detektierten Konturen mit abgespeicherten Konturen und ermöglicht in entsprechender Weise den Abgleich einer detektierten Verteilung der Helligkeitsintensität oder der Farbwerte mit den abgespeicherten Helligkeitsintensitäts- bzw. Farbwertverteilungen, um auf diese Weise eine differenzierte Produktklassifizierung und Produktfehlererkennung zu ermöglichen.

Die erfindungsgemäße Vorrichtung kann weiter fortgebildet werden durch eine Eigendiagnose- und Korrekturvorrichtung, die ausgebildet ist, um eine Störung eines einzelnen Detektors zu erkennen und die Auswertungseinrichtung zu veranlassen, die Messwerte eines solcherart erkannten Detektors nicht zur berücksichtigen. Eine solche Eigendiagnose- und Korrekturvorrichtung kann beispielsweise Detektoren, die über eine bestimmte Zeitspanne einen gleichbleibenden Wert ausgegeben haben, obwohl die jeweils benachbarten Detektoren unterschiedliche Werte zeigen, als fehlerhaft klassifizieren und aus der Auswertung der Detektionsergebnisse herausnehmen, um auf diese Weise Konturfehlerkennungen durch ausgefallene Detektoren zu vermeiden. Der ausgefallene Detektor wird dabei vorzugsweise durch einen zu diesem benachbarten Detektor ersetzt.

Dabei ist es sinnvoll, wenn die Eigendiagnose- und Korrekturvorrichtung ausgebildet ist, um bei Überschreitung einer vorbestimmten Anzahl gestörter Detektoren ein Warnsignal auszugeben. Typischerweise kann der Ausfall einzelner Detektoren von der Zählvorrichtung kompensiert werden und dennoch ein sicheres Zählergebnis garantiert werden. Bei einer bestimmten Anzahl ausgefallener Detektoren wird das Zählergebnis jedoch nicht mehr zwangsläufig mit den tatsächlich durchgelaufenen Gegenständen übereinstimmen, da eine Kompensation der ausgefallenen Detektoren nicht mehr möglich ist. In diesem Fall ist es sinnvoll, ein Warnsignal auszugeben, um eine Behebung des Fehlers, beispielsweise einer Reinigung der Detektoren zu veranlassen.

Die erfindungsgemäße Vorrichtung kann weiter fortgebildet werden, indem die Auswertungseinrichtung ausgebildet ist, um anhand der ermittelten Konturen eines Gegenstands und anhand vorbekannter abgespeicherter Referenzwerte das Volumen und/oder Gewicht des Gegenstands zu berechnen und die Werte auszugeben oder in einer Speichervorrichtung abzuspeichern. Die von den Detektoren erfasste Kontur ermöglicht es oftmals, Gegenstände, die beispielsweise in verschiedenen Größen oder Geometrietypen auftreten, voneinander zu unterscheiden und zu klassifizieren. Dabei kann aus der ermittelten Kontur auch auf das Volumen und das Gewicht des Gegenstands geschlossen werden, indem die aus der Konturlinie ermittelte detektierte Fläche mit Referenzwerten verarbeitet wird, die ein Verhältnis zum typischen Volumen bzw. Gewicht des Gegenstands anhand der erfassten Konturlinie darstellen. Die solcherart ermittelten Werte werden vorzugsweise in separaten Speichereinheiten einer Speichervorrichtung abgespeichert. So kann beispielsweise bereits beim Zählen von Hühnereiern eine Klassifikation nach den unterschiedlichen Gewichtsklassen erfolgen und eine vereinfachte Produktionsplanung und -kontrolle ermöglicht werden.

Die erfindungsgemäße Vorrichtung weist , indem eine Vielzahl von Detektorzeilen auf. Dies ermöglicht eine hochaufgelöste Analyse der Kontur-, Farbverteilung- und Helligkeitsintensitätsverteilung der zu zählenden Gegenstände. Idealerweise kann diese Ausführungsform ausgeführt werden, indem eine digitale Bilderfassung mit einem mehrzeiligen optischen Sensor, beispielsweise einem CCD-Sensor, verwendet wird und auf diese Weise eine Vielzahl von Zeilen mit jeweils einer Vielzahl von Detektoren bereitgestellt wird. Dies ist beispielsweise möglich, indem die erfindungsgemäße Zählvorrichtung mit einer entsprechenden digitalen Videokamera ausgeführt wird. Diese Ausführungsform ermöglicht es des weiteren, die gesamte Konturlinie eines Gegenstands mit einer einmaligen Datenerfassung zu detektieren, den Gegenstand anhand dieser Konturlinie zu identifizieren und folglich schnell und zuverlässig zu zählen. Desweiteren ist es mit dieser Ausführungsform möglich, differenziert und hochaufgelöst die Farb- und Helligkeitsintensitätsverteilungen innerhalb und außerhalb der Kontur des Gegenstands zu erfassen.

Ein weiterer Aspekt der Erfindung ist eine bedarfsgesteuerte Fördervorrichtung für Gegenstände, insbesondere Eier, umfassend eine Fördervorrichtung zum Fördern der Gegenstände, eine Zählvorrichtung nach einem der vorhergehenden Ansprüche, die so angeordnet ist, dass sie die der Fördervorrichtung zugeführten Gegenstände zählt, und eine Steuerung, die ausgebildet ist, um eine Förderung der Gegenstände durch die Fördervorrichtung zu veranlassen, wenn eine vorbestimmte Menge von Gegenständen durch die Zählvorrichtung gezählt worden ist.

Diese Fördervorrichtung ermöglicht es, dass insbesondere in Bereichen, in denen eine diskontinuierliche Produktion oder ein diskontinuierlicher Eingang von Produkten zu einer Fördervorrichtung erfolgt, die Fördervorrichtung bedarfsgerecht anzusteuern, d.h. die Fördervorrichtung nur dann zu betätigen, wenn eine solche Produktmenge der Fördervorrichtung zugeführt worden ist, die eine Förderung, gegebenenfalls zeitlich begrenzt, erfordert.

Ein weiterer Aspekt der Erfindung ist eine Vorrichtung zum Fördern und Zählen und/oder Qualitätsüberwachen von Eiern, umfassend ein angetriebenes Endlosförderband zum Fördern der Eier, eine Zählvorrichtung nach einem der vorhergehenden Ansprüche, umfassend mehrere Detektorzeilen mit einer Vielzahl von Detektoren zur Erfassung der Kontur und der Verteilung der Helligkeitsintenität und/oder der Farbe jedes Eis, die so angeordnet ist, dass sie die auf dem Förderband geförderten Eier zählt und analysiert, und eine Schnittstelle zum Ausgeben und/oder eine Speichervorrichtung zum Abspeichern der Anzahl der geförderten Eier in mehreren, zuvor bestimmten Gewichtsklassen. Die so ausgebildete Fördervorrichtung eignet sich in besonders günstiger Weise dazu, um den Ablauf der Produktion in den der Fördervorrichtung vorgelagerten Produktionsbereichen zu kontrollieren.

Ein weiterer Aspekt der Erfindung ist ein Verfahren zum Zählen von Gegenständen nach Anspruch 15. Das Verfahren kann fortgebildet werden nach den Ansprüchen 16-25. Zu den Vorteilen, Ausführungsvarianten und Ausführungsdetails des Verfahrens und seiner Fortbildungen wird auf die zuvor beschriebenen, entsprechenden Vorrichtungsaspekte derjenigen Vorrichtung und Vorrichtungsfortbildungen verwiesen, die zur Ausführung der entsprechenden Verfahrensform speziell fortgebildet und geeignet sind.

Eine bevorzugte Ausführungsform der Erfindung wird anhand der beiliegenden Figuren beschrieben. Es zeigen:

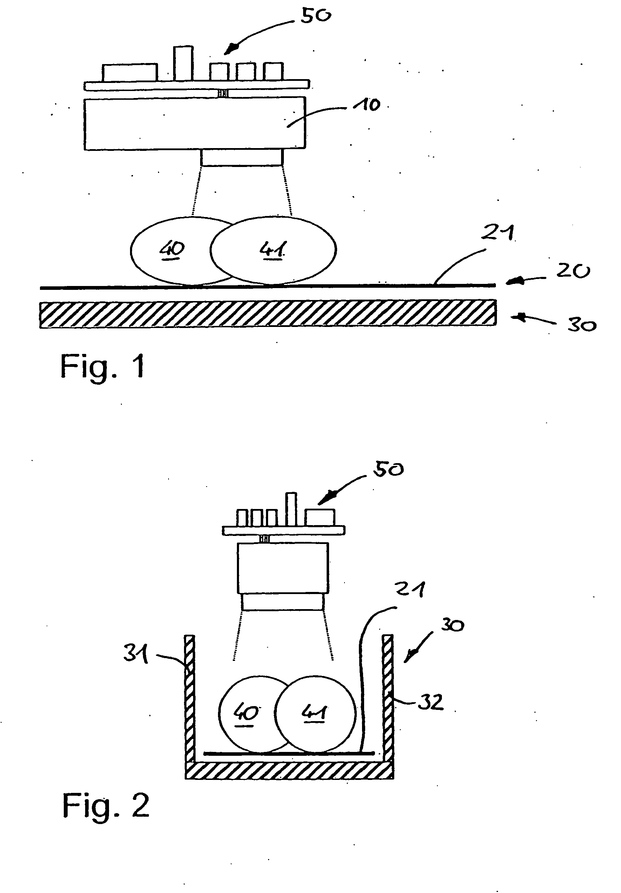

- Fig. 1:: Eine längsgeschnittene Seitenansicht einer erfindungsgemäßen Zählvorrichtung, die über einer Fördervorrichtung angeordnet ist,
- Fig. 2:: Eine quergeschnittene Frontalansicht der Anordnung nach Fig. 1, und
- Fig. 3:: Ein schematisches Ablaufdiagramm des erfindungsgemäßen Zählvorgangs.

Die erfindungsgemäße Ausführungsform weist eine digitale, mehrzeilige CCD-Kamera 10 auf, die einen Beobachtungsbereich abtastet, der sich über einen vorbestimmten Winkelbereich senkrecht nach unten erstreckt.

Durch den Beobachtungsbereich der CCD-Kamera 10 läuft ein Endlosförderband 20, dessen oberer Förderbandtrumm 21 in einer U-förmigen Führungsvorrichtung 30 angeordnet ist, so dass die beiden Schenkel 31,32 der U-förmigen Führungsvorrichtung Eier, die sich auf dem oberen Förderbandtrumm 21 befinden, daran hindern, seitlich vom Förderbandtrumm herabzufallen.

Das Förderband 20 ist mit einer Vielzahl von Löchern (nicht dargestellt) versehen, die so bemessen sind, dass ein Ei nicht durch die Löcher hindurch fallen kann, sondern teilweise von einem solchen Loch aufgenommen und dadurch relativ zum Förderband in einem Formschluss fixiert wird. Das Förderband weist eine typische Breite von 10cm auf, jedoch sind auch Förderbänder mit kleineren oder größeren Breiten und anders konstruierte Fördervorrichtungen, wie beispielsweise Stabbandförderer, mit der erfindungsgemäßen Zählvorrichtung abtastbar.

Die auf dem oberen Förderbandtrumm 21 abgelegten Eier 40,41 werden durch den Beobachtungsraum der CCD-Kamera 10 hindurchgefördert und hierbei zeilenweise mit hoher Frequenz abgetastet und erfasst. Eine an die CCD-Kamera 10 angeschlossene Auswertungsvorrichtung 50 registriert die unterschiedlichen Bilddatenwerte aus dem Beobachtungsbereich der CCD-Kamera und identifiziert die Eier auf dem Förderband 20.

Die Kontur, d.h. die Umrisslinie der Eier, wie sie sich aus der Blickrichtung der CCD-Kamera 10 darstellt, wird von der Auswertungsvorrichtung erkannt, sobald ein Ei den Beobachtungsbereich der CCD-Kamera erreicht. Ein solcher Art erkanntes Ei wird mit in der Auswertungseinrichtung einprogrammierten Eiprofilen verglichen und auf diese Weise identifiziert. Nach der Identifizierung wird das Ei in der Auswertungsvorrichtung als identifiziertes Ei markiert und seine Bewegung durch den Beobachtungsraum verfolgt. Sobald ein Ei auf diese Weise identifiziert wird, wird ein Zählerwert in einem Speicher der Auswertungsvorrichtung 50 um 1 erhöht. Das Ei wird verfolgt und verlässt üblicherweise den Beobachtungsbereich der CCD-Kamera 10 auf der gegenüberliegend zum Eintrittsort liegenden Seite. Verlässt das Ei ausnahmsweise den Beobachtungsbereich auf der gleichen Seite, an der es auch eingetreten ist, so wird der Zählerwert im Speicher der Auswertungsvorrichtung um 1 verringert. Diese Verringerung erfolgt auch, wenn ein Ei den Beobachtungsbereich entgegen der Förderrichtung durchläuft.

Die CCD-Kamera hat eine integrierte Infrarotbeleuchtungsvorrichtung und die CCD-Sensoren arbeiten im Infrarotbereich, so dass die CCD-Kamera unabhängig ist von der Beleuchtung im Umgebungsbereich der Zählvorrichtung.

Die CCD-Kamera 10 erfasst des weiteren das Reflektionsmuster des Eies, d.h. die Helligkeitsintensitätsverteilung der Eioberfläche und kann dadurch zwischen den Löchern des Förderbands 20 und den darauf abgelegten Eiern unterscheiden.

Die CCD-Kamera verfügt des weiteren über eine Kommunikationsschnittstelle (nicht dargestellt), über die sie mit einer oder mehreren weiteren CCD-Kameras gekoppelt werden kann, um einen breiteren Beobachtungsbereich abzudecken. Die Bilddaten der solcherart gekoppelten CCD-Kameras werden über eine zentrale Auswertungsvorrichtung ausgewertet. Überlappungsbereiche werden in der Auswertungsvorrichtung registriert und solcherart ausgewertet, dass eine Doppelzählung in diesen Bereichen unterbleibt.

Die Auswertungsvorrichtung 50 weist eine Kommunikationsschnittstelle auf, mit der die von den CCD-Kameras erfassten und durch die Auswertungsvorrichtung ausgewerteten Daten ausgegeben werden können. In die Auswertungsvorrichtung ist weiterhin ein Diagnoseprogramm integriert, welches Funktionsstörungen und Verschmutzungen der Optik der CCD-Kamera 10 erkennt und ein entsprechendes Signal ausgeben kann.

Die Auswertungsvorrichtung 50 erfasst weiterhin die Oberfläche jedes identifizierten Eies und berechnet unter Berücksichtigung der im Speicher als Referenz abgelegten Oberflächenkrümmung eines Eies den prozentualen Anteil der verschmutzten Oberfläche an der Gesamtoberfläche des Eies. Übersteigt dieser prozentuale Anteil einen vorbestimmten Grenzwert, so wird ein separater Zähler im Speicher erhöht.

Die Auswertungsvorrichtung 50 vergleicht weiterhin die äußere Kontur jedes identifizierten Eies mit im Speicher abgelegten Sollkonturen von Eiern und ist auf diese Weise in der Lage, ein Windei zu erkennen. Wiederum wird bei der Erkennung eines Windeies ein separater Zählwert im Speicher erhöht. In gleicher Weise kann die Auswertungsvorrichtung 50 durch Umrisserkennung und Vergleich mit eingespeicherten Sollwertumrissen zerbrochene oder unvollständige Eier erkennen und entsprechend zählen.

In der Auswertungsvorrichtung ist weiterhin eine Referenztabelle abgespeichert, die Umrechnungsfaktoren enthält, die für unterschiedliche Betrachtungswinkel, Formen und Größen eine Berechnung des Eivolumens aus der erkannten Kontur ermöglicht. Die Referenztabelle enthält weiterhin Umrechnungsfaktoren, mit denen aus dem Eivolumen das Gesamteigewicht berechnet werden kann und folglich eine Zuweisung des identifizierten Eies in eine Gewichtsklasse erfolgen kann. Gegebenenfalls sind einzelne Zähler vorhanden, die es ermöglichen, dass die Eier nach Gewichtsklasse aufgeschlüsselt gezählt werden.

Die Zählvorrichtung ist des weiteren in der Lage, durch Abtasten des Förderbands die Förderbandgeschwindigkeit zu registrieren und als Signal bereitzustellen.

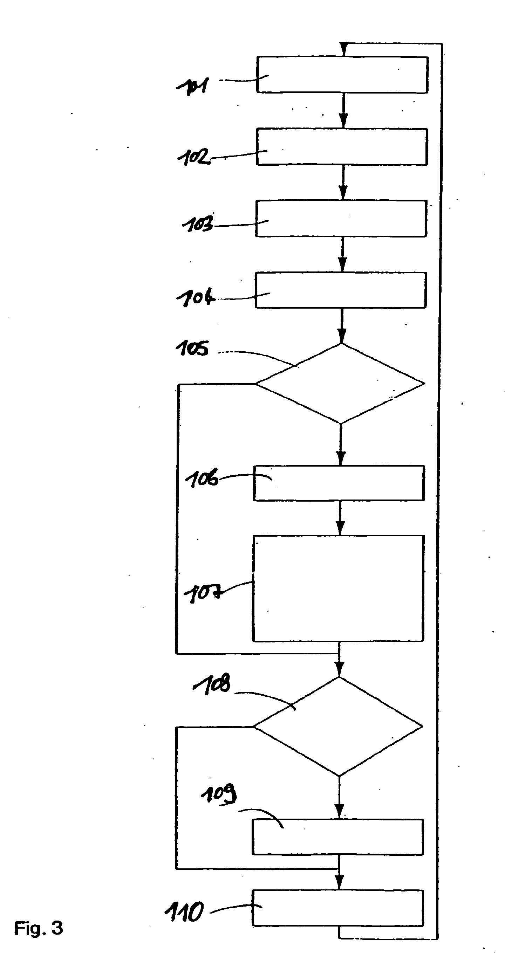

Fig. 3 zeigt einen beispielhaften Ablaufvorgang des Zählvorgang mit der erfindungsgemäßen Zählvorrichtung beziehungsweise dem erfindungsgemäßen Zählverfahren.

Der zyklische Vorgang beginnt mit einem Schritt 101, in dem vom Zählsensor ein Bild aufgenommen wird. Das aufgenommene Bild wird an eine Auswertungseinheit übersandt, in der in einem Schritt 102 die Kontur eines im Bildbereich befindlichen Gegenstands oder mehrerer Gegenstände ermittelt wird und in einem Schritt 103 aus den solcherart ermittelten Konturen Objekte extrahiert werden. Die solcherart extrahierten Objekte werden in einem Schritt 104 zugeordnet, um die Entscheidung 105 treffen zu können, ob sich unter diesen Objekten neu erfasste Objekte befinden oder lediglich bereits zuvor extrahierte Objekte erkannt wurden.

In Abhängigkeit dieser Entscheidung 105 wird im Falle, dass neue Objekte gefunden worden sind, in einem Schritt 106 ein Zähler erhöht und in einem Schritt 107 die für das aufgefundene Objekt oder die neu aufgefundenen Objekte relevanten Merkmale, wie Verschmutzung, Größenzuordnung, Volumen- und Gewichtsermittlung, extrahiert, erfasst und berechnet und einer statistischen Auswertung zugeführt. Sofern bei der Entscheidung 105 keine neuen Objekte gefunden wurden, werden die Schritte 106 und 107 übersprungen und das Verfahren setzt sich an der gleichen Stelle fort mit einer Entscheidung 108.

Bei der Entscheidung 108 wird anhand der extrahierten und zugeordneten Objekte geprüft, ob Objekte den Aufnahmebereich entgegen der normalen Förderrichtung verlassen haben. Ist dies der Fall, so wird in einem Schritt 109 der Zähler um die Anzahl der Objekte reduziert, die den Bereich entgegen der normalen Förderrichtung verlassen haben. Wenn kein Objekt den Bereich entgegen der normalen Förderrichtung verlassen hat, bleibt der Zähler unverändert.

Der Zyklus endet mit dem Schritt 110, in dem die Daten an eine Auswertungs- oder Statistikeinheit übermittelt werden und beginnt dann erneut mit dem Schritt 101.

Durch die Erfindung wird eine Vorrichtung und ein Verfahren zum Zählen von Gegenständen, insbesondere von Eiern, bereit gestellt, die bzw, das eine hinsichtlich der verfügbaren Funktionen differenziertere Aussage zu den Produktionsabläufen und etwaigen Produktionsablaufstörungen ermöglicht und folglich einen ökonomischeren Produktionsablauf ermöglicht. Die erfindungsgemäße Vorrichtung ist weitestgehend unempfindlich gegenüber Störungen des Zählvorgangs und meldet diese selbständig. Zusätzliche Daten, wie Verschmutzung oder Produktfehler können ebenfalls erkannt und gezählt bzw. gemeldet werden.

## Patentansprüche

1. Vorrichtung zum Zählen von bewegten Gegenständen, insbesondere Eiern, umfassend eine digitale Bilderfassung mit einem mehrzeiligen optischen Sensor (10), beispielsweise einem CCD-Sensor, der eine Vielzahl von Zeilen mit jeweils einer Vielzahl von Detektoren aufweist, wobei
- eine Vielzahl von ersten Detektoren (10) vorgesehen ist,
i. von denen jeder einen lokal begrenzten Detektionsbereich aufweist,
ii. die eine optische Strahlung, insbesondere Licht im sichtbaren oder infraroten Bereich, aus dem Detektionsbereich erfassen können, und
iii. die in einer ersten Zeile nebeneinander angeordnet sind
- eine Auswertungseinheit (50), die mit den ersten Detektoren gekoppelt und ausgebildet ist, um die Signale der ersten Detektoren zu verarbeiten und aufgrund des Signals jedes ersten Detektors das Vorhandensein eines Gegenstands im Detektionsbereich des ersten Detektors zu ermitteln,
und eine Vielzahl von zweiten Detektoren (10) vorgesehen ist,
i. von denen jeder einen lokal begrenzten Detektionsbereich aufweist,
ii. die eine optische Strahlung, insbesondere Licht im sichtbaren oder infraroten Bereich, aus dem Detektionsbereich detektieren können, und
iii. die in einer zweiten Zeile benachbart und parallel zur ersten Zeile nebeneinander angeordnet sind,
- wobei die Auswertungseinrichtung (50) mit den zweiten Detektoren gekoppelt ist und ausgebildet ist, um die Signale der zweiten Detektoren zu verarbeiten und aufgrund des Signals jedes Detektors das Vorhandensein eines Gegenstands im Detektionsbereich des zweiten Detektors zu ermitteln,
**dadurch gekennzeichnet, dass**
- die Auswertungseinrichtung (50) derart ausgebildet ist, um durch Vergleichen der Detektorsignale benachbarter erster Detektoren und benachbarter zweiter Detektoren zumindest einen Ausschnitt der Kontur des Gegenstands senkrecht zur Detektionsrichtung zu ermitteln und durch Vergleich zweier zeitlich beabstandet ermittelter Ausschnitte der Kontur des Gegenstands einerseits eine Bewegungseinrichtung des Gegenstands relativ zu den Detektoren zu ermitteln und andererseits zu ermitteln, ob ein neuer Gegenstand in den Detektionsbereich eingetreten ist und
- dass die Auswertungseinrichtung (50) eine Zählvorrichtung um fasst, die ausgebildet ist, um einen Zähler um eins zu erhöhen, wenn eine neuer Gegenstand sich in einer Eintrittsrichtung in den Detektionsbereich der Detektoren bewegt hat und identifiziert worden ist, und.
- wobei die Zählvorrichtung ausgebildet ist, um den Zähler um eins zu verringern, wenn ein Gegenstand, der sich in den Detektionsbereich der Detektoren bewegt hat und identifiziert worden ist, sich entgegen seiner Eintrittsrichtung aus dem Detektionsbereich bewegt hat.

2. Vorrichtung nach Anspruch 1,
**dadurch gekennzeichnet, dass** eine bestimmte Anzahl von ersten und zweiten Detektoren in einer ersten bzw. zweiten Zeile angeordnet sind und eine Schnittstelle vorhanden ist, um die Vorrichtung mit einer anderen Vorrichtung mit ersten und zweiten Detektoren so zu koppeln, dass die ersten und zweiten Zeilen der beiden Vorrichtungen in Verlängerung zueinander angeordnet sind..

3. Vorrichtung nach einem der vorhergehenden Ansprüche,
**dadurch gekennzeichnet, dass** die Detektoren ausgebildet sind, um im infraroten Wellenbereich zu detektieren und dass zumindest eine Infrarot-Strahlungsquelle bereitgestellt ist zur Ausleuchtung der Detektionsbereiche.

4. Vorrichtung nach Anspruch 3,
**dadurch gekennzeichnet, dass** für jeden Detektor eine Infrarot-Strahlungsquelle bereitgestellte ist zur Ausleuchtung des Detektionsbereichs des Detektors.

5. Vorrichtung nach einem der vorhergehenden Ansprüche,
**dadurch gekennzeichnet, dass** die Auswertungseinrichtung ausgebildet ist, um mehrere in den Detektionsbereichen der Detektoren erfasste Gegenstände gleichzeitig auszuwerten.

6. Vorrichtung nach einem der vorhergehenden Ansprüche,
**gekennzeichnet durch** eine Speichervorrichtung, in der zumindest eine Kontur, vorzugsweise mehrere vorbekannte Konturen eines oder mehrerer Gegenstände abgespeichert sind und **durch** eine Vergleichsvorrichtung, um die von den Detektoren erfasste Kontur eines Gegenstands mit der/den abgespeicherten Kontur(en) zu vergleichen und den Gegenstand so zu identifizieren.

7. Vorrichtung nach einem der vorhergehenden Ansprüche,
**dadurch gekennzeichnet, dass** die ersten und/oder zweiten Detektoren ausgebildet sind, um eine Helligkeitsintensität und/oder einen Farbwert aus dem Detektionsbereich zu ermitteln.

8. Vorrichtung nach dem vorhergehenden Anspruch,
**dadurch gekennzeichnet, dass** die Auswertungseinrichtung ausgebildet ist, um anhand der Helligkeitsintensität und/oder des Farbwerts ein Oberflächenmerkmal des Gegenstands, insbesondere einen Verschmutzungsgrad, zu ermitteln,

9. Vorrichtung nach einem der beiden vorhergehenden Ansprüche.
**gekennzeichnet durch** eine Speichervorrichtung, in der zumindest ein, vorzugsweise mehrere vorbekannte Schwellwerte oder Verteilungen der Helligkeitsintensität und/oder der Farbwerte innerhalb der Kontur des Gegenstands abgespeichert sind, und **durch** eine Vergleichsvorrichtung, um einen von den Detektoren erfassten lokalen oder gemittelten Wert oder eine Verteilung der Helligkeitsintensität und/oder der Farbwerte eines Gegenstands mit der/den abgespeicherten Schwellwerten bzw. Verteilungen der Helligkeitsintensität und/oder Farbwerte zu vergleichen und den Gegenstand so bei Über- und/oder Unterschreitung eines Schwellwerts oder bei Übereinstimmung der abgespeicherten und erfassten Verteilungsmuster zu identifizieren.

10. Vorrichtung nach einem der vorhergehenden Ansprüche,
**gekennzeichnet durch** eine Eigendiagnose- und Korrekturvorrichtung, die ausgebildet ist, um eine Störung eines einzelnen Detektors zu erkennen und die Auswertungseinrichtung zu veranlassen, die Messwerte eines solcherart erkannten Detektors nicht zur berücksichtigen.

11. Vorrichtung nach dem vorhergehenden Anspruch,
**dadurch gekennzeichnet, dass** die Eigendiagnose- und Korrekturvorrichtung ausgebildet ist, um bei Überschreitung einer vorbestimmten Anzahl gestörter Detektoren ein Warnsignal auszugeben.

12. Vorrichtung nach einem der vorhergehenden Ansprüche,
**dadurch gekennzeichnet, dass** die Auswertungseinrichtung ausgebildet ist, um anhand der ermittelten Konturen eines Gegenstands und anhand vorbekannter abgespeicherter Referenzwerte das Volumen und/oder das Gewicht des Gegenstands zu berechnen und die Werte auszugeben oder in einer Speichervorrichtung abzuspeichern.

13. Bedarfsgesteuerte Fördervorrichtung für Gegenstände, insbesondere Eier, umfassend
- eine Fördervorrichtung (20, 21, 30-32) zum Fördern der Gegenstände
- eine Zählvorrichtung nach einem der vorhergehenden Ansprüche, die so angeordnet ist, dass sie die der Fördervorrichtung zugeführten Gegenstände zählt, und
- eine Steuerung, die ausgebildet ist, um eine Förderung der Gegenstände durch die Fördervorrichtung zu veranlassen, wenn eine vorbestimmte Menge von Gegenständen durch die Zählvorrichtung gezählt worden ist.

14. Vorrichtung zum Fördern und Zählen und/oder Qualitätsüberwachen von Eiern, umfassend
- ein angetriebenes Endlosförderband (20) zum Fördern der Eier,
- eine Zählvorrichtung nach einem der vorhergehenden Ansprüche 1-12, umfassend mehrere Detektorzeilen mit einer Vielzahl von Detektoren zur Erfassung der Kontur und der Verteilung der Helligkeitsintensität und/oder der Farbe jedes Eis, die so angeordnet ist, dass sie die auf dem Förderband geförderten Eier zählt und analysiert, und
- eine Schnittstelle zum Ausgeben und/oder eine Speichervorrichtung zum Abspeichern der Anzahl der geförderten Eier in mehreren, zuvor bestimmten Gewichtsklassen.

15. Verfahren zum Zählen von bewegten Gegenständen, insbesondere Eiern, wobei eine digitale Bilderfassung mit einem mehrzeiligen optischen Sensor, beispielsweise einem CCD-Sensor, der eine Vielzahl von Zeilen mit jeweils einer Vielzahl von Detektoren aufweist, verwendet wird, mit den Schritten
- Erfassen einer optischen Strahlung, insbesondere Licht im sichtbaren oder infraroten Bereich, aus einem jeweils lokal begrenzten Detektionsbereich einer Vielzahl von ersten Detektoren, die in einer ersten Zeile nebeneinander angeordnet sind
- Ermitteln des Vorhandenseins eines Gegenstands im Detektionsbereich zumindest eines der ersten Detektoren anhand der aus dem Detektionsbereich empfangenen optischen Strahlung,
- Erfassen einer optischen Strahlung, insbesondere Licht im sichtbaren oder infraroten Bereich, aus einem jeweils lokal begrenzten Detektionsbereich einer Vielzahl von zweiten Detektoren, die in einer zweiten Zeile benachbart und parallel zur ersten Zeile nebeneinander angeordnet sind
- Ermitteln des Vorhandenseins eines Gegenstands im Detektionsbereich zumindest eines der zweiten Detektoren anhand der aus dem Detektionsbereich empfangenen optischen Strahlung,
**dadurch gekennzeichnet, dass**
- die Detektorsignale benachbarter erster Detektoren und benachbarter zweiter Detektoren verglichen werden und zumindest ein Ausschnitt der Kontur des Gegenstands senkrecht zur Detektionsrichtung ermittelt wird, und
- zwei zeitlich versetzt erfasste und ermittelte Konturen oder Ausschnitte der Kontur des Gegenstands verglichen werden und aus der Anordnung der Konturen(ausschnitte) und der Zeit zwischen den Messungen einerseits eine Bewegungsrichtung des Gegenstands relativ zu den Detektoren ermittelt wird und andererseits ermittelt wird, ob es sich bei den zeitlich versetzt ermittelten Konturen/Konturenausschnitten um denselben Gegenstand oder um unterschiedliche Gegenstände handelt, und
- Hochsetzen eines Zählers um eins, wenn sich ein bisher nicht ermittelter Gegenstand in einer vorbestimmten Einrittsrichtung in den Detektionsbereich der Detektoren bewegt hat und identifiziert worden ist, und
- Verringern des Zählers um eins, wenn sich ein bereits zuvor ermittelter und gezählter Gegenstand entgegen der Eintrittsrichtung aus dem Detektionsbereich bewegt hat.

16. Verfahren nach dem vorhergehenden Anspruch,
**dadurch gekennzeichnet, dass** mittels einer oder mehrerer Infrarot-Strahlungsquellen der Detektionsbereich der Detektoren ausgeleuchtet wird.

17. Verfahren nach einem der beiden vorhergehenden Ansprüche,
**dadurch gekennzeichnet, dass** die von den Detektoren erfasste Kontur eines Gegenstands mit abgespeicherten, vorbekannten Konturen verglichen wird.

18. Verfahren nach einem der drei vorhergehenden Ansprüche,
**dadurch gekennzeichnet, dass** die ersten und/oder zweiten Detektoren eine Helligkeitsintensität und/oder einen Farbwert aus dem Detektionsbereich ermitteln.

19. Verfahren nach dem vorhergehenden Anspruch,
**dadurch gekennzeichnet, dass** anhand der Helligkeitsintensität und/oder des Farbwerts ein Oberflächenmerkmal des Gegenstands, insbesondere ein Verschmutzungsgrad oder eine Verschmutzungsart des Gegenstands, ermittelt wird.

20. Verfahren nach einem der beiden vorhergehenden Ansprüche,
**dadurch gekennzeichnet, dass** ein von den Detektoren erfasster lokaler oder gemittelter Wert oder eine Verteilung der Helligkeitsintensität und/oder der Farbwerte eines Gegenstands mit abgespeicherten Schwellwerten oder Verteilungen der der Helligkeitsintensität und/oder der Farbwerte verglichen wird.

21. Verfahren nach einem der vorhergehenden Ansprüche 15-20,
**dadurch gekennzeichnet, dass** eine Störung eines einzelnen Detektors erkannt wird und anstelle der Signale eines solcherart erkannten Detektors die Signale eines zu diesem benachbarten Detektors verwendet werden.

22. Verfahren nach dem vorhergehenden Anspruch,
**dadurch gekennzeichnet, dass** bei Überschreitung einer vorbestimmten Anzahl gestörter Detektoren ein Warnsignal ausgegeben wird.

23. Verfahren nach einem der vorhergehenden Ansprüche 15-22,
**dadurch gekennzeichnet, dass** anhand der ermittelten Konturen eines Gegenstands und anhand vorbekannter abgespeicherter Referenzwerte das Volumen und Gewicht des Gegenstands berechnet und die berechneten Werte ausgegeben oder abgespeichert werden.

24. Verfahren zu bedarfsgerechten Steuerung einer Fördervorrichtung für Gegenstände, insbesondere Eier, mit den Schritten
- Zuführen der Gegenstände zu einer Fördervorrichtung,
- Zählen der der Fördervorrichtung zugeführten Gegenstände mit einem Verfahren nach einem der vorherigen Ansprüche 15-23, und
- Fördern der Gegenstände durch die Fördervorrichtung, wenn eine vorbestimmte Menge von Gegenständen gezählt worden ist.

25. Verfahren zum Fördern und Zählen und/oder Qualitätsüberwachen von Eiern, umfassend
- Fördern der Eier auf einem Förderband,
- Zählen der Gegenstände mit einem Zählverfahren nach einem der vorhergehenden Ansprüche 15-23,
- Erfassen der Kontur, der Helligkeitsintensitäts- und/oder der Farbverteilung jedes Eis und Identifizieren des Eis anhand dieser Kontur, Helligkeitsintensitäts- und/oder Farbverteilung,
- Berechnen des Eigewichts aus der erfassten Kontur des Eis, und/oder
- Berechnen des verschmutzten Oberflächenanteils des Eis aus der Helligkeitsintensitäts- und/oder Farbverteilung, und
- Ausgeben und/oder Speichern der Anzahl in mehreren, zuvor bestimmten Gewichtsklassen und/oder des Verschmutzungsgrads der geförderten Eier.

## Claims

1. An apparatus for counting moved articles, in particular eggs, comprising a digital image acquisition with a multi-line optical sensor (10), for example a CCD sensor, which has a plurality of lines with a plurality of detectors in each case, wherein
- a plurality of first detectors (10) are provided,
i. of which each has a locally restricted detection range,
ii. which can detect an optical radiation, in particular light in the visible or infrared range, from the detection range, and
iii. which are arranged adjacent to one another in a first line,
- an evaluation unit (50) which is coupled to the first detectors and is designed in order to process the signals of the first detectors and, on the basis of the signal of each first detector, to determine the presence of an article in the detection range of the first detector,
and a plurality of second detectors (10) are provided,
i. of which each has a locally restricted detection range,
ii. which can detect an optical radiation, in particular light in the visible or infrared range, from the detection range, and
iii. which are arranged adjacent in a second line and adjacent to one another parallel to the first line,
- wherein the evaluation device (50) is coupled to the second detectors and is designed in order to process the signals of the second detectors and, on the basis of the signal of each detector, to determine the presence of an article in the detection range of the second detector,
**characterized in that**
- the evaluation device (50) is designed in order to determine, by comparison of the signals of adjacent first detectors and adjacent second detectors, at least one portion of the contour of the article at a right angle to the detection direction and in order to determine, by comparison of two portions of the contour of the article determined with a time interval, a direction of movement of the article relative to the detectors on the one hand and whether a new article has entered the detection range on the other hand, and
- the evaluation device (50) comprises a counting apparatus which is designed in order to advance a counter by one when a new article has moved into the detection range of the detectors in a direction of entry and has been identified, and
- wherein the counting apparatus is designed in order to set back the counter by one when an article, which has moved into the detection range of the detectors and has been identified, has moved out of the detection range in a direction opposed to its direction of entry.

2. An apparatus according to Claim 1, **characterized in that** a specified number of first and second detectors are arranged in a first and a second line respectively, and an interface is present in order to couple the apparatus to another apparatus with first detectors and second detectors in such a way that the first and second lines of the two apparatus are arranged in the form of a continuation of each other

3. An apparatus according to one of the preceding Claims, **characterized in that** the detectors are designed in order to detect in the infrared wave band, and at least one infrared-radiation source is made available in order to illuminate the detection ranges.

4. An apparatus according to Claim 3, **characterized in that** an infrared-radiation source is made available for each detector in order to illuminate the detection range of the detector.

5. An apparatus according to any one of the preceding Claims, **characterized in that** the evaluation device is designed in order to evaluate simultaneously a plurality of articles detected in the detection ranges of the detectors.

6. An apparatus according to any one of the preceding Claims, **characterized by** a storage apparatus in which at least one contour, preferably a plurality of previously known contours, of one or more articles is or are stored, and by a comparison apparatus in order to compare the contour of an article detected by the detectors with the stored contour or contours and in order to identify the article in this way.

7. An apparatus according to any one of the preceding Claims, **characterized in that** the first and/or second detectors are designed in order to determine an intensity of brightness and/or a colour value from the detection range.

8. An apparatus according to the preceding Claim, **characterized in that** the evaluation device is designed in order to determine a surface feature of the article, in particular a degree of soiling, with reference to the intensity of brightness and/or the colour value.

9. An apparatus according to one of the two preceding Claims, **characterized by** a storage apparatus in which at least one previously known threshold value or distribution, preferably a plurality of previously known threshold values or distributions, of the intensity of brightness and/or the colour values within the contour of the article are stored, and by a comparison apparatus in order to compare a local value detected by the detectors or a determined value or a distribution of the intensity of brightness and/ or of the colour values of an article with the stored threshold value or distribution or threshold values or distributions of the intensity of brightness and/or colour values and in order to identify the article in this way in the event of a threshold value being exceeded and/or not being reached or in the event of correspondence of the stored and detected distribution patterns.

10. An apparatus according to any one of the preceding Claims, **characterized by** a self-diagnosis and correction apparatus which is designed in order to recognize a defect in an individual detector and to cause the evaluation device not to take into consideration the measurement values of a detector recognized in this way.

11. An apparatus according to the preceding Claim, **characterized in that** the self diagnosis and correction apparatus is designed in order to emit a warning signal in the event of a pre-determined number of defective detectors being exceeded.

12. An apparatus according to any one of the preceding Claims, **characterized in that** the evaluation device is designed in order to calculate, with reference to the determined contours of an article and with reference to previously known stored reference values, the volume and/or the weight of the article and in order to display the values or to store them in a storage apparatus.

13. A demand-controlled conveying apparatus for articles, in particular eggs, comprising
- a conveying apparatus (20, 21, 30 to 32) for conveying the articles,
- a counting apparatus according to any one of the preceding Claims, which is arranged in such a way that it counts the articles supplied to the conveying apparatus, and
- a control means which is designed in order to cause the articles to be conveyed by the conveying apparatus when a pre-determined quantity of articles has been counted by the counting apparatus.

14. An apparatus for the conveying and counting and/or for the quality-control of eggs, comprising
- a driven endless conveyor belt (20) for conveying the eggs,
- a counting apparatus according to any one of the preceding Claims 1 to 12, comprising a plurality of detector lines with a plurality of detectors for detecting the contour and the distribution of the intensity of brightness and/or the colour of each egg, which is arranged in such a way that it counts and analyses the eggs conveyed on the conveyor belt, and
- an interface for the display and/or a storage apparatus for the storage of the number of the conveyed eggs in a plurality of classes of weight determined beforehand.

15. A method of counting moved articles, in particular eggs, wherein use is made of a digital image acquisition with a multi-line optical sensor, for example a CCD sensor, which has a plurality oflines with a plurality of detectors in each case, with the steps
- detection of an optical radiation, in particular light in the visible or infrared range, from a detection range - locally restricted in each case - of a plurality of first detectors which are arranged adjacent to one another in a first line,
- determination of the presence of an article in the detection range of at least one of the first detectors with reference to the optical radiation received from the detection range,
- detection of an optical radiation, in particular light in the visible or infrared range, from a detection range - locally restricted in each case - of a plurality of second detectors which are arranged adjacent in a second line and adjacent to one another parallel to the first line,
- determination of the presence of an article in the detection range of at least one of the second detectors with reference to the optical radiation received from the detection range,
**characterized in that**
- the signals of adjacent first detectors and adjacent second detectors are compared, and at least one portion of the contour of the article is determined at a right angle to the detection direction, and
- two contours or portions of the contour of the article detected and determined with a time interval are compared, and, from the arrangement of the contours or portions of the contour and the time between the measurements, a direction of movement of the article relative to the detectors is determined on the one hand and it is determined on the other hand whether the contours or portions of the contour determined with a time interval relate to the same article or to different articles, and
- advancing a counter by one when an article - not previously determined - has moved into the detection range of the detectors in a pre-determined direction of entry and has been identified, and
- setting back the counter by one when an article - already previously determined and counted - has moved out of the detection range in a direction opposed to the direction of entry.

16. A method according to the preceding Claim, **characterized in that** the detection range of the detectors is illuminated by means of one or more infrared-radiation sources.

17. A method according to one of the two preceding Claims, **characterized in that** the contour of an article detected by the detectors is compared with stored, previously known contours.

18. A method according to any one of the three preceding Claims, **characterized in that** the first detectors and/or second detectors determine an intensity of brightness and/or a colour value from the detection range.

19. A method according to the preceding Claim, **characterized in that** a surface feature of the article, in particular a degree of soiling or a manner of soiling of the article, is determined with reference to the intensity of brightness and/or the colour value.

20. A method according to one of the two preceding Claims, **characterized in that** a local value detected by the detectors or a determined value or a distribution of the intensity of brightness and/or of the colour values of an article is or are compared with stored threshold values or distributions of the intensity of brightness and/or of the colour values.

21. A method according to any one of the preceding Claims 15 to 20, **characterized in that** a defect of an individual detector is recognized and, instead of the signals of a detector recognized in this way, the signals of a detector adjacent thereto are used.

22. A method according to the preceding Claim, **characterized in that** a warning signal is emitted in the event of a pre-determined number of defective detectors being exceeded.

23. A method according to any one of the preceding Claims 15 to 22, **characterized in that** the volume and weight of the article are calculated with reference to the detected contours of an article and with reference to previously known stored reference values, and the calculated values are displayed or stored.

24. A method of controlling, in accordance with requirements, a conveying apparatus for articles, in particular eggs, with the steps
- supplying the articles to a conveying apparatus,
- counting the articles supplied to the conveying apparatus with a method according to any one of the preceding Claims 15 to 23, and
- conveying the articles by the conveying apparatus when a pre-determined quantity of articles has been counted.

25. A method of conveying and counting and/or quality-control of eggs, comprising
- conveying the eggs on a conveyor belt,
- counting the articles with a counting method according to any one of the preceding Claims 15 to 23,
- detecting the contour, the intensity of brightness and/or the colour distribution of each egg and identifying the egg with reference to the said contour, the intensity of brightness and/or the colour distribution,
- calculating the inherent weight from the detected contour of the egg, and/or
- calculating the soiled surface portion of the egg from the intensity of brightness and/or the colour distribution, and
- displaying and/or storing the number in a plurality of pre-determined classes of weight and/or of the degree of soiling of the eggs conveyed.

## Revendications

1. Dispositif de comptage d'objets mobiles, en particulier d'oeufs, comportant un capteur d'images numérique avec un détecteur optique (10) multiligne, par exemple un capteur CCD qui présente une pluralité de lignes avec respectivement une pluralité de détecteurs, dans lequel
- une pluralité de premiers détecteurs (10) est prévue,
i. dont chacun présente une zone de détection délimitée localement,
ii. qui peuvent détecter un rayonnement optique, en particulier de la lumière dans le domaine du visible ou de l'infrarouge, à partir de la zone de détection, et
iii. qui sont disposés dans une première ligne les uns à côté des autres
- une unité d'évaluation (50) qui est réalisée et couplée aux premiers détecteurs pour traiter les signaux des premiers détecteurs et pour déterminer la présence d'un objet dans la zone de détection du premier détecteur en vertu du signal de chaque premier détecteur,
et une pluralité de seconds détecteurs (10) est prévue,
i. dont chacun présente une zone de détection délimitée localement,
ii. qui peuvent détecter un rayonnement optique, en particulier de la lumière dans le domaine du visible ou de l'infrarouge, à partir de la zone de détection, et
iii. qui sont disposés dans une seconde ligne de manière contigüe et parallèle à la première ligne, les uns à côté des autres,
- dans lequel le dispositif d'évaluation (50) est réalisé et couplé aux seconds détecteurs pour traiter les signaux des seconds détecteurs et pour déterminer la présence d'un objet dans la plage de détection du second détecteur en vertu du signal de chaque détecteur,
**caractérisé en ce que**
- le dispositif d'évaluation (50) est réalisé afin de déterminer au moins une découpe du contour de l'objet perpendiculairement au sens de détection par comparaison des signaux de détecteur des premiers détecteurs contigus et des seconds détecteurs contigus, et pour déterminer, d'une part, un sens de déplacement de l'objet par rapport aux détecteurs et, d'autre part, si un nouvel objet est entré dans la zone de détection, par comparaison de deux découpes du contour de l'objet, décalées par un intervalle de temps et
- le dispositif d'évaluation (50) comporte un dispositif de comptage qui est réalisé afin d'incrémenter d'un un compteur, lorsqu'un nouvel objet s'est déplacé dans un sens d'entrée dans la zone de détection des détecteurs et a été identifié, et
- dans lequel le dispositif de comptage est réalisé afin de diminuer le compteur d'un, lorsqu'un objet qui s'est déplacé dans la zone de détection des détecteurs et a été identifié, s'est déplacé dans le sens inverse de son sens d'entrée de la zone de détection.

2. Dispositif selon la revendication 1,
**caractérisé en ce qu'**un certain nombre de premiers et seconds détecteurs sont disposés dans une première ou seconde ligne, et une passerelle est présente afin de coupler le dispositif à un autre dispositif doté de premiers et seconds détecteurs de sorte que les premières et secondes lignes des deux dispositifs soient disposées dans le prolongement l'une de l'autre.

3. Dispositif selon l'une quelconque des revendications précédentes,
**caractérisé en ce que** les détecteurs sont réalisés afin de détecter dans la gamme d'ondes infrarouge, et **en ce qu'**au moins une source de rayonnement infrarouge est mise à disposition pour l'éclairage des zones de détection.

4. Dispositif selon la revendication 3,
**caractérisé en ce que** pour chaque détecteur, une source de rayonnement infrarouge est mise à disposition pour l'éclairage de la zone de détection du détecteur.

5. Dispositif selon l'une quelconque des revendications précédentes,
**caractérisé en ce que** le dispositif d'évaluation est réalisé afin d'évaluer simultanément plusieurs objets détectés dans les zones de détection des détecteurs.

6. Dispositif selon l'une quelconque des revendications précédentes,
**caractérisé par** un dispositif de mémorisation, dans lequel au moins un contour, de préférence plusieurs contours connus d'un ou de plusieurs objets sont enregistrés, et par un dispositif de comparaison afin de comparer le contour détecté par les détecteurs d'un objet avec le/les contour(s) enregistré(s) et d'identifier l'objet.

7. Dispositif selon l'une quelconque des revendications précédentes,
**caractérisé en ce que** les premiers et/ou les seconds détecteurs sont réalisés afin de déterminer une intensité lumineuse et/ou une valeur chromatique à partir de la zone de détection.

8. Dispositif selon l'une quelconque des revendications précédentes,
**caractérisé en ce que** le dispositif d'évaluation est réalisé afin de déterminer une caractéristique de surface de l'objet, en particulier un degré de salissure à l'aide de l'intensité lumineuse et/ou de la valeur chromatique.

9. Dispositif selon l'une quelconque des deux revendications précédentes,
**caractérisé par** un dispositif de mémorisation, dans lequel au moins une, de préférence plusieurs valeurs seuils connues ou des réglages de l'intensité lumineuse et/ou des valeurs chromatiques dans le contour de l'objet sont enregistrées, et par un dispositif de comparaison afin de comparer une valeur moyenne ou locale détectée par les détecteurs ou un réglage de l'intensité lumineuse et/ou des valeurs chromatiques d'un objet avec le/les valeurs seuils enregistrées ou réglages de l'intensité lumineuse et/ou des valeurs chromatiques et d'identifier l'objet lors du passage au-dessus et/ou au-dessous d'une valeur seuil ou lors de la concordance des modèles de réglage détectés et enregistrés.

10. Dispositif selon l'une quelconque des revendications précédentes,
**caractérisé par** un dispositif d'autodiagnostic et de correction qui est réalisé afin d'identifier une défaillance d'un détecteur individuel et d'avoir pour effet que le dispositif d'évaluation ne prenne pas en considération les valeurs de mesure d'un détecteur détecté de la sorte.

11. Dispositif selon l'une quelconque des revendications précédentes,
**caractérisé en ce que** le dispositif d'autodiagnostic et de correction est réalisé afin d'émettre un signal d'alerte lors du dépassement d'un nombre prédéterminé de détecteurs en panne.

12. Dispositif selon l'une quelconque des revendications précédentes,
**caractérisé en ce que** le dispositif d'évaluation est réalisé afin de calculer à l'aide des contours déterminés d'un objet et à l'aide des valeurs de référence enregistrées et connues, le volume et/ou le poids de l'objet ; et de restituer les valeurs ou de les enregistrer dans un dispositif de mémorisation.

13. Dispositif de transport pour objets commandé en fonction des besoins, en particulier d'oeufs, comportant
- un dispositif de transport (20, 21, 30-32) pour le transport des objets,
- un dispositif de comptage selon l'une quelconque des revendications précédentes, qui est disposé de sorte à compter les objets amenés au dispositif de transport, et
- une commande qui est réalisée afin de provoquer un transport des objets par le dispositif de transport, lorsqu'une quantité prédéterminée d'objets a été comptée par le dispositif de comptage.

14. Dispositif de transport et de comptage et/ou de contrôle qualité d'oeufs, comportant :
- une bande transporteuse sans fin (20) entraînée pour le transport des oeufs,
- un dispositif de comptage selon l'une quelconque des revendications précédentes 1 à 12, comportant plusieurs lignes de détecteur avec une pluralité de détecteurs pour la détection du contour et le réglage de l'intensité lumineuse et/ou la couleur de chaque oeuf qui est disposé de sorte à compter et analyser les oeufs transportés sur la bande transporteuse, et
- une interface pour restituer et/ou un dispositif de mémorisation pour enregistrer le nombre d'oeufs transportés dans plusieurs catégories de poids déterminées auparavant.

15. Procédé de comptage d'objets mobiles, en particulier d'oeufs, dans lequel un capteur d'images numérique avec un détecteur optique multiligne, par exemple un capteur CCD est utilisé, lequel met à la disposition une pluralité de lignes avec respectivement une pluralité de détecteurs ; comportant les étapes suivantes :
- détecter un rayonnement optique, en particulier de la lumière dans le domaine du visible ou de l'infrarouge, à partir d'une zone de détection délimitée respectivement localement d'une pluralité de premiers détecteurs qui sont disposés dans une première ligne les uns à côté des autres,
- déterminer la présence d'un objet dans la zone de détection d'au moins un des premiers détecteurs au moyen du rayonnement optique reçu de la zone de détection,
- détecter un rayonnement optique, en particulier de la lumière dans le domaine du visible ou de l'infrarouge, à partir d'une zone de détection délimitée respectivement localement d'une pluralité de seconds détecteurs qui sont disposés dans une seconde ligne les uns à côté des autres,
- détecter la présence d'un objet dans la zone de détection d'au moins un des seconds détecteurs au moyen du rayonnement optique reçu de la zone de détection,
**caractérisé en ce que**
- les signaux de détecteur des premiers détecteurs contigus et des seconds détecteurs contigus sont comparés et au moins une découpe du contour de l'objet est déterminée perpendiculairement au sens de détection, et
- deux contours déterminés et détectés de manière décalée dans le temps ou des découpes du contour de l'objet sont comparées ; déterminer à partir de la disposition des contours (découpes) et du temps entre les mesures, d'une part, un sens de déplacement de l'objet par rapport aux détecteurs et, d'autre part, s'il s'agit, pour les contours/découpes de contour définis de manière décalée dans le temps, du même objet ou d'objets différents
le procédé comportant les autres étapes consistant à :
- incrémenter un compteur d'un lorsqu'un objet non déterminé jusque là s'est déplacé dans un sens d'entrée prédéterminé dans la zone de détection des détecteurs et a été identifié, et
- diminuer le compteur d'un lorsqu'un objet déjà déterminé et compté auparavant s'est déplacé dans le sens inverse d'entrée de la zone de détection.

16. Procédé selon l'une quelconque des revendications précédentes,
**caractérisé en ce que** la zone de détection des détecteurs est éclairée au moyen d'une ou de plusieurs sources de rayonnement infrarouge.

17. Procédé selon l'une quelconque des revendications précédentes,
**caractérisé en ce que** le contour détecté par les détecteurs d'un objet est comparé avec des contours enregistrés, connus.

18. Procédé selon l'une des trois revendications précédentes,
**caractérisé en ce que** les premiers et/ou seconds détecteurs déterminent une intensité lumineuse et/ou une valeur chromatique à partir de la zone de détection.

19. Procédé selon la revendication précédente,
**caractérisé en ce qu'**une caractéristique de surface de l'objet, en particulier un degré de salissure ou un type de salissure de l'objet, est déterminée à partir de l'intensité lumineuse et/ou de la valeur chromatique.

20. Procédé selon l'une quelconque des deux revendications précédentes,
**caractérisé en ce qu'**une valeur moyenne ou locale déterminée par les détecteurs ou un réglage de l'intensité lumineuse et/ou des valeurs chromatiques d'un objet est comparé avec des valeurs seuil enregistrées ou des réglages de l'intensité lumineuse et/ou des valeurs chromatiques.

21. Procédé selon l'une quelconque des revendications 15 à 20, **caractérisé en ce qu'**une défaillance d'un détecteur individuel est détectée et les signaux d'un détecteur contigu à celui-ci sont utilisés à la place des signaux d'un détecteur détecté de la sorte.

22. Procédé selon la revendication précédente,
**caractérisé en ce que** lors du dépassement d'un nombre prédéterminé de détecteurs en panne, un signal d'alerte est émis.

23. Procédé selon l'une quelconque des revendications précédentes 15 à 22,
**caractérisé en ce que** le volume et le poids de l'objet sont calculés à partir des contours déterminés d'un objet et au moyen des valeurs de référence enregistrées connues, et les valeurs calculées sont restituées ou enregistrées.

24. Procédé de commande selon le besoin d'un dispositif de transport pour objets, en particulier d'oeufs, comportant les étapes consistant à
- amener les objets à un dispositif de transport,
- compter les objets amenés au dispositif de transport avec un procédé selon l'une quelconque des revendications précédentes 15 à 23, et
- transporter les objets par le dispositif de transport si une quantité prédéterminée d'objets a été comptée.

25. Procédé de transport et de comptage et/ou de contrôle qualité d'oeufs, comportant
- le transport des oeufs sur une bande transporteuse,
- le comptage des objets avec un procédé de comptage selon l'une quelconque des revendications précédentes 15 à 23,
- la détection du contour, du réglage de l'intensité lumineuse et/ou de la couleur de chaque oeuf et l'identification de l'oeuf au moyen de ce contour, réglage de l'intensité lumineuse et/ou de la couleur,
- le calcul du poids de l'oeuf à partir du contour de l'oeuf détecté et/ou
- le calcul de la part de surface salie de l'oeuf à partir du réglage de l'intensité lumineuse et/ou de la couleur, et
- la restitution et/ou l'enregistrement du nombre dans plusieurs catégories de poids déterminées auparavant et/ou du degré de salissure des oeufs transportés.
